# EUROPEAN PATENT APPLICATION

(11) **EP 1 109 275 A2**
(43) Date of publication of application: **20.06.2001**
(21) Application number: 00811123.9
(22) Date of filing: 24.11.2000
(51) Int. Cl.: H01S 3/067

(54) **L-Band optical amplifier**

(30) Priority: 13.12.1999 US 459639
(71) Applicant: JDS Uniphase Inc., Nepean, Ontario K2G 5W8 (CA)
(72) Inventor: Bollond, Paul, Tinton Falls, New Jersey 07724 (US)
(74) Representative: Frei, Alexandra Sarah

(57) **Abstract**

An optical amplifier for amplifying an L-band optical signal is disclosed. The amplifier has a first and a second stage and has an optical isolator disposed between the two stages for preventing light from propagating from the second stage to the first stage. The the first stage has a first length of rare earth doped amplifying fibre and has a pump for generating a pump with wavelength of more than 1400 nm coupled to the first length of rare earth doped optical fibre. This input end of the first length of rare earth doped optical fibre being coupled to receive and pre-amplify the L-band signal; A second stage has second length of rare earth doped amplifying fibre for receiving residual pump power from the first stage via the optical isolator and for receiving C-band ASE that has been generated within the first stage and for receiving the pre-amplified L-band signal. The second stage utilizes the residual pump power and the C-band ASE energy for constructively for further amplifying the pre-amplified L-band signal, in the absence of a pump signal of less than 1400 nm being applied to the second stage.

## Description

### Field of the Invention

This invention relates generally to optical amplifiers and more particularly to a relatively inexpensive optical amplifier having a relatively low-noise figure for amplifying optical signals in the L-band having a wavelength of between 1565 and 1620 nm.

### Background of the Invention

Conventional optical amplifiers for amplifying optical signals in the C band which includes the wavelengths 1525-1565 nm are well known. For example, Huber in U.S. Patent No. 5,140,456 discloses a C band optical amplifier having a first forward pumping stage that utilizes a 980 nm pump laser and a second backward pumping stage that utilizes a 1480 nm pump laser to achieve high power efficiency. The first stage in a multi-stage optical amplifier is critical with respect to ensuring a low noise figure parameter in order to optimize the overall performance of the amplifier. Noise figures of an erbium doped optical fibre amplifier pumped at 980 nm have been found to be near 3 dB which is a desirable performance figure. Huber in the '456 patent discloses that optimal power is not achieved by using a 980 nm pump alone. Huber further comments that although a 1480 nm pump lasers provide higher power efficiency, they unfortunately has a noise figure of approximately 5 dB which is too high for most applications. Huber's solution to this problem of providing a C-band optical amplifier with sufficient power is the provision of a 980 pump laser at a pre-amplifying stage, and the addition of a 1480 nm back-pumped laser to provide additional required energy without suffering from the unacceptable low-noise figure parameter that would result if a 1480 nm pump laser were used in the sensitive pre-amplifying stage. Thus, it is generally agreed upon that using a 1480 nm pump in a pre-amplifying stage of a multi-stage optical amplifier to amplify optical signals in the C-band is not practicable.

In the past, making low-cost optical amplifiers to amplify optical signals in the L-band, which extends from about 1565 nm to 1620 nm has not been cost effective compared to the manufacture of C-band optical amplifiers. Due to the high cost of laser pumps and the requirement that L-band amplifiers have required substantially more erbium-doped optical fibre than C-band amplifiers, the commercial manufacture of a low cost L-band amplifier has not been realized. Optical pump lasers in the 1480 nm band are less expensive and more powerful than the lower wavelength 980 nm pumps however are viewed as having too high a noise-figure parameter.

It is an object of this invention to provide a multi-stage optical amplifier that has a pre-amplifying stage with a 1480 forward pumped laser.

It is a further object of the invention to provide a multi-stage optical amplifier for amplifying optical signals in the L-band that requires a shorter length of erbium-doped fibre than has previously been required in L-band optical amplifiers.

It is a further object of this invention to provide a low-cost L-band optical amplifier with a substantially low noise figure parameter.

### Summary of the Invention

In accordance with the invention, an optical amplifier for amplifying an L-band optical signal having a wavelength greater than or equal to 1565 nm and less than or equal to 1620 nm is provided, comprising:
a first stage preceding a second stage and serially coupled therewith, the first stage having a first length of rare earth doped amplifying optical fibre having an input end and an output end coupled with and closer to the second stage than the input end, the input end optically coupled with a pump for providing a pump signal having a wavelength between 1400 and 1500 nm to the first length of rare earth doped amplifying fibre and optically coupled to receive the L-band optical signal;
the second stage having an input end and an output end, the input end of the second stage being coupled with the output end of the first stage, the second stage having a second length of rare earth doped amplifying optical fibre; and,
an optical isolator disposed between the first and second stages.

In accordance with the invention there is further provided, an optical amplifier for amplifying an L-band optical having a wavelength within a range of 1565 and 1620 nm signal having a first pre-amplifying stage for providing a pre-amplified optical signal and a second amplifying stage serially connected therewith such that in operation the second stage receives a pre-amplified signal from the first stage, the first pre-amplifying stage having a first length of erbium doped optical fibre coupled to a pump having a wavelength between 1400 and 1500 nm and coupled to receive the L-band optical signal, the pre-amplifying stage in operation generating C-band ASE having a wavelength within the range of 1525-1565 nm along with the pre-amplified signal, the second amplifying stage having a second length of erbium doped fibre for further amplifying the pre-amplified optical signal and for converting C-band ASE provided from the first stage into energy suitable for contributing to further amplifying the pre-amplified signal within the second length of erbium doped fibre.

In accordance with another aspect of the invention there is provided, a method of amplifying an L-band optical signal comprising the steps of:
a) propagating in a same direction, the L-band optical signal having a wavelength between 1565 and 1620 nm and a pump signal having a wavelength of between 1400 and 1500 nm within a first pre-amplifying stage including a rare earth doped optical fibre for providing a pre-amplified optical signal;
b) providing output light from the first pre-amplifying stage to a second amplifying stage serially connected with the first stage via an isolator substantially preventing light from back propagation, the output light including the pre-amplified L-band signal, C-band ASE generated in the first pre-amplifying stage and residual pump power; utilizing substantial portions of the residual pump power the C-band ASE resulting from the first stage to be converted to energy within the second amplifying stage in a length of rare earth doped optical fibre for further amplifying the pre-amplified optical signal.

In accordance with another aspect of the invention, an optical amplifier for amplifying an L-band optical signal having a wavelength greater or equal to 1565 nm and less or equal to 1620 nm consisting of:
a first stage preceding a second stage and serially coupled therewith, the first stage having a first length of rare earth doped amplifying optical fibre having an input end and an output end coupled with and closer to the second stage than the input end, the input end optically coupled with a single pump for providing a single pump signal having a wavelength between 1400 and 1500 nm to the first length of rare earth doped amplifying fibre and optically coupled to receive the L-band optical signal;
the second stage having an input end and an output end, the input end of the second stage being optically coupled with the output end of the first stage, the second stage having a second length of rare earth doped amplifying optical fibre; and,
an optical isolator disposed between the first and second stages.

There is further provided, an optical amplifier for amplifying an L-band optical signal comprising:
a first and a second stage;
an optical isolator disposed between the first and second stages for preventing light from propagating from the second stage to the first stage;
the first stage having a first length of rare earth doped amplifying fibre having an input end and an output end optically coupled with an input end of the optical isolator;
one or more pumps for generating one or more pump signals each having wavelengths of more than 1400 nm coupled to the the first length of rare earth doped optical fibre, the input end of the first length of rare earth doped optical fibre being coupled to receive and pre-amplify the L-band signal; and,
the second stage having second length of rare earth doped amplifying fibre for receiving residual pump power from the first stage via the optical isolator and for receiving C-band ASE that has been generated within the first stage and for receiving the pre-amplified L-band signal, the second stage for utilizing the residual pump power and the C-band ASE energy for constructively for further amplifying the pre-amplified L-band signal, in the absence of a pump signal of less than 1400 nm being applied to the second stage.

### Brief Description of the Drawings

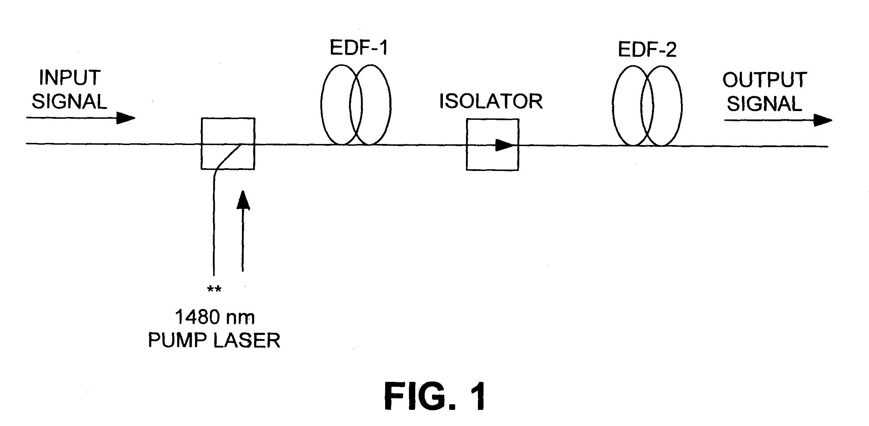

Exemplary embodiments of the invention will now be described in conjunction with the Fig. 1 which is a schematic representation of an erbium fibre amplifier in accordance with an embodiment of the invention.

### Detailed Description

The present invention provides a low-noise, high-power rare earth fibre amplifier suitable for amplification of L-band optical signals having a wavelength substantially in the range of 1565 to 1620 nm. Although the description is directed to erbium-doped amplifying fibre, this invention is not limited in this manner and substitution for other rare-earth doped fibres can be made.

It is well known that a 980 nm pump wavelength for an erbium-doped fibre amplifier produces a lower noise figure than a 1480 nm pump wavelength in the C-band. Hence, 1480 pump lasers are not used in a pre-amplifying stage of commercially available C-band optical amplifiers.

However, what has recently been discovered, which is the focus of this invention, is that a 1480 wavelength pump laser provides a substantially low noise figure when used as a pump in a pre-amplifying stage of an L-band optical amplifier. The improved power efficiency for a pump wavelength of 1480 nm is evident from the following equations, wherein E is the photon energy, h is Planck's constant, *v* is the frequency associated with a designated wavelength λ, and C is the speed of light:
E_{λ} = *hν*_{*2*}
C*= λν*
*E*_{*1550*}*/E*_{*980*} *= 980/1550 = 63%*
*E*_{*1550*}*/E*_{*1480*} *= 1480/1550 = 96%*

Evidently, the quantum efficiency of a photon at the 1480 pump wavelength is 96%, whereas the quantum efficiency at the 980 pump wavelength is only 63%. Thus from the point of view of quantum efficiency, the 1480 nm pump wavelength enjoys a substantial power efficiency in an erbium-doped fibre amplifier. Although this is known, the use of 1480 nm pumps has been restricted due to the poor and often unacceptable low-noise figure. As was mentioned heretofore, Huber in U.S. Patent No. 5,140,456 restricted the use of a 1480 nm pump to back-pumping a C-band signal.

The discovery of this invention is that a single 1480 pump laser can be used efficiently to produce amplification of an optical signal having a wavelength in the L-band of a two-stage amplifier wherein the 1480 pump laser is disposed such that it provides forward pumping in the first pre-amplifying stage, while providing an amplifier with an overall acceptable noise figure.

Turning now to Fig. 1, a two stage amplifier is shown, having two lengths of erbium-doped amplifying fibre EDF-1 and EDF-2 separated by an optical isolator for preventing light from propagating backwards, from the second stage having the second length of amplifying fibre EDF-2 to the first stage having the first length of amplifying fibre EDF-1. A 1480 nm pump laser is coupled in a conventional manner to provide optical energy having a wavelength of 1480 nm to propagate into the length of EDF-1 in a direction toward EDF-2. An input signal is coupled into the EDF-1 with the pump laser signal to be amplified. Advantageously, the lengths of erbium-doped amplifying fibre are shorter than lengths typically required for L-band optical amplifiers. For example, the length of EDF-1 is 5 m and the length of EDF-2 is 30 m.

Since the L-band 1480 pump laser has a lower noise figure in the L-band than it would have for use in the C-band, and has a comparable to the noise figure for a 980 laser in the C-band the architecture shown if Fig. 1 is practicable for use in the L-band and produces surprisingly good results. In the C-band, 980 pumping can produce a quantum limited noise characteristic in the amplifier; in the L-band the 1480 nm pump laser has a noise characteristic which is close to the quantum limit for the L-band noise. Thus, the overall efficiency of the L-band amplifier of this invention is very high.

In operation, the two-stage amplifier shown in Fig. 1, in accordance with this invention only requires a single pump at the input for forward pumping. Notwithstanding, this advantage should not be construed as a limitation; for example in other embodiments of this invention additional pumps may be provided if required. Furthermore, the exemplary embodiment is confined to a multi-stage amplifier having two stages. However additional stages can be added, as well as additional pumps. The basic configuration of this invention is a two-stage amplifier having a single pump having a wavelength between about 1400 nm and 1500 nm and preferably 1480 nm. Such 1480 nm pump lasers provide high power suitable for providing amplifying energy to more than one stage of a multi-stage amplifier and are commercially available at a relatively low cost.

The amplified spontaneous emission (ASE) which results when using erbium-doped fibre as an amplifying medium is typically the "noise" accompanying the amplified signal. In the instant invention, when using the 1480 pump at the pre-amplifying stage to provide energy to EDF-1, a C-band component and an L-band component to the ASE is present; the L-band component defines the L-band noise component of the amplifier.
Surprisingly, and advantageously the L-band amplifier shown in Fig. 1, re-absorbs a substantial portion of the C-band ASE primarily in the second stage in EDF-2. Hence, the two-stage amplifier shown, is like a three-stage pumping scheme; in the C-band noise is converted to useful energy rather than being useless unwanted ASE noise.

The first pre-amplifying stage has small gain to prevent self-saturation by ASE in L-band. The pump light causes inversion of first stages' amplifying medium. The fibre EDF-1 in the first stage is long enough to ensure sufficient gain, and the noise figure of the second stage is determined primarily by the first stage.

This invention utilizes the otherwise wasted C band ASE having a wavelength of 1525-1565 which together with the L-band amplified signal propagates through the isolator after the first stage. Conveniently, the second stage further amplifies the L-band signal using residual pump power from the first stage, as well as the C-band ASE that is also a pump source for the L-band.

The isolator reduces the transmission of the backward travelling ASE from the second length to the first length, which further increases the efficiency of the EDFA.

Of course numerous other embodiments can be envisaged without departing from the spirit and scope of the invention.

## Claims

1. An optical amplifier for amplifying an L-band optical signal having a wavelength greater than or equal to 1565 nm and less than or equal to 1620 nm comprising:
a first stage preceding a second stage and serially coupled therewith, the first stage having a first length of rare earth doped amplifying optical fibre having an input end and an output end coupled with and closer to the second stage than the input end, the input end optically coupled with a pump for providing a pump signal having a wavelength between 1400 and 1500 nm to the first length of rare earth doped amplifying fibre and optically coupled to receive the L-band optical signal;
the second stage having an input end and an output end, the input end of the second stage being coupled with the output end of the first stage, the second stage having a second length of rare earth doped amplifying optical fibre; and,
an optical isolator disposed between the first and second stages.

2. An optical amplifier as defined in claim 1 wherein the output end of the first length of amplifying fibre is connected to an input end of the optical isolator, and wherein an output end of the optical isolator is connected to the input end of the second length of amplifying fibre.

3. An optical amplifier as defined in claim 2, wherein the pump signal has a wavelength of substantially about 1480 nm.

4. An optical amplifier for amplifying an L-band optical having a wavelength within a range of 1556 and 1620 nm signal having a first pre-amplifying stage for providing a pre-amplified optical signal and a second amplifying stage serially connected therewith such that in operation the second stage receives a pre-amplified signal from the first stage, the first pre-amplifying stage having a first length of erbium doped optical fibre coupled to a pump having a wavelength between 1400 and 1500 nm and coupled to receive the L-band optical signal, the pre-amplifying stage in operation generating C-band ASE having a wavelength within the range of 1525-1565 nm along with the pre-amplified signal, the second amplifying stage having a second length of erbium doped fibre for further amplifying the pre-amplified optical signal and for converting C-band ASE provided from the first stage into energy suitable for contributing to further amplifying the pre-amplified signal within the second length of erbium doped fibre.

5. A method of amplifying an L-band optical signal comprising the steps of:
a) propagating in a same direction, the L-band optical signal having a wavelength between 1565 and 1620 nm and a pump signal having a wavelength of between 1400 and 1500 nm within a first pre-amplifying stage including a rare earth doped optical fibre for providing a pre-amplified optical signal;
b) providing output light from the first pre-amplifying stage to a second amplifying stage serially connected with the first stage via an isolator substantially preventing light from back propagation, the output light including the pre-amplified L-band signal, C-band ASE generated in the first pre-amplifying stage and residual L-band power;
utilizing substantial portions of the residual L-band power the C-band ASE resulting from the first stage to be converted to energy within the second amplifying stage in a length of rare earth doped optical fibre for further amplifying the pre-amplified optical signal.

6. A method as defined in claim 4 wherein only one pump signal is provided.

7. A method as defined in claim 6, wherein the pump signal has a wavelength substantially about 1480 nm.

8. An optical amplifier for amplifying an L-band optical signal having a wavelength greater or equal to 1565 nm and less or equal to 1620 nm consisting of:
a first stage preceding a second stage and serially coupled therewith, the first stage having a first length of rare earth doped amplifying optical fibre having an input end and an output end coupled with and closer to the second stage than the input end, the input end optically coupled with a single pump for providing a single pump signal having a wavelength between 1400 and 1500 nm to the first length of rare earth doped amplifying fibre and optically coupled to receive the L-band optical signal;
the second stage having an input end and an output end, the input end of the second stage being optically coupled with the output end of the first stage, the second stage having a second length of rare earth doped amplifying optical fibre; and,
an optical isolator disposed between the first and second stages.

9. An optical amplifier for amplifying an L-band optical signal comprising:
a first and a second stage;
an optical isolator disposed between the first and second stages for preventing light from propagating from the second stage to the first stage;
the first stage having a first length of rare earth doped amplifying fibre having an input end and an output end optically coupled with an input end of the optical isolator;
one or more pumps for generating one or more pump signals each having wavelengths of more than 1400 nm coupled to the the first length of rare earth doped optical fibre, the input end of the first length of rare earth doped optical fibre being coupled to receive and pre-amplify the L-band signal; and,
the second stage having second length of rare earth doped amplifying fibre for receiving residual pump power from the first stage via the optical isolator and for receiving C-band ASE that has been generated within the first stage and for receiving the pre-amplified L-band signal, the second stage for utilizing the residual pump power and the C-band ASE energy for constructively for further amplifying the pre-amplified L-band signal, in the absence of a pump signal of less than 1400 nm being applied to the second stage.
